# EUROPEAN PATENT SPECIFICATION

(11) **EP 3 361 213 B1**
(45) Date of publication and mention of the grant of the patent: **05.08.2020**
(21) Application number: 17155269.8
(22) Date of filing: 08.02.2017
(51) Int. Cl.: G01C 3/08, G01S 17/08, G01C 11/02, G01B 11/00, F41G 3/06, G01C 15/00, G01S 5/16, G01S 19/48, G01S 19/53

(54) **A SYSTEM FOR THE DETERMINATION OF THE POSITION OF AN OBSERVED TARGET**
SYSTEM ZUR BESTIMMUNG DER POSITION EINES BEOBACHTETEN ZIELS
SYSTÈME DE DÉTERMINATION DE LA POSITION D'UNE CIBLE OBSERVÉE

(43) Date of publication of application: 15.08.2018
(73) Proprietor: Metronor AS, 1394 Nesbru (NO)
(72) Inventor: Øyvind, Røtvold, 1395 Hvalstad (NO)
(74) Representative: Lang, Johannes

(56) References cited:
- US-A- 5 440 392
- US-A- 5 821 900
- US-A1- 2013 329 218
- US-A1- 2016 033 307

## Description

Several man-portable systems exist to enable an operator, such as e.g. an artillery observer or a reconnaissance soldier, to provide precise target position data to other parties, such as e.g. to an artillery battery or an aircraft controller. Such systems are important in modern warfare, where precision weapons can be delivered extremely accurately and with minimal collateral damage, provided precise information on the target position can be provided, preferably in a global coordinate system such as the World Geodetic System (WGS).

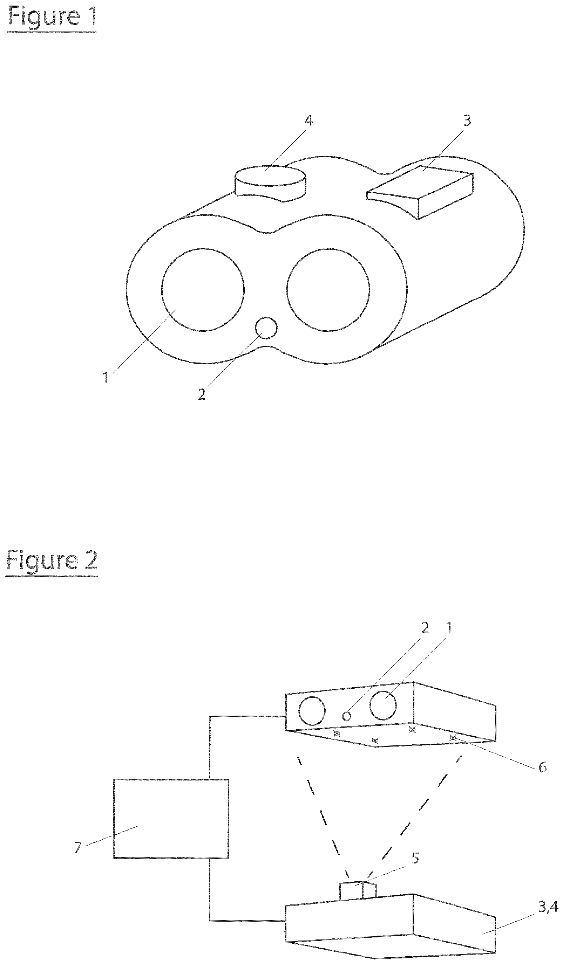

The traditional system, as shown in Fig. 1, comprises a means 1 for target observation as e.g. binoculars, periscope, IR camera, a rangefinder 2 for determining the distance from the observer's position to the target's position, a means 3 for determining the position of the system such as a Global Positioning System (GPS) and a means 4 for determining the orientation of the system such as a compass or multi-axes electromagnetic sensor.

Another type of position determination system is known from US 2013/0329218. The disclosed system comprises a geodetic target, including a survey rod having a range finder mounted thereon, and a tachymeter with a GPS receiver. The system can be used to determine the absolute position of a target point selected by an operator.

Such systems are well-known and offered by numerous commercial sources. They offer portability, ruggedness and simplicity of use.

They have one main drawback, the accuracy of the data provided. The GPS offers finite position accuracy, and the compass also has finite accuracy and is dependent on correct compensation for the global magnetic field, as well as being susceptible to disturbances from magnetic materials in the surrounding environment. These systems therefore only provide target position data with finite precision.

The problem of the present invention is to overcome these drawbacks.

This is achieved according to the invention by a system as defined in independent claims 1 and 2. Advantageous embodiments of the invention are claimed in dependent claim 3.

The core of the present invention is the physical separation of the means for determining the position and orientation of the system from the means for target observation. Hereby, the means for target observation can be made smaller and more flexible to use. In the present invention, the means for target observation consists simply of the means to view the target, such as binoculars and/or an IR camera, and the means to determine the range to the target, such as a laser rangefinder. This makes the means for target observation smaller, lighter and easier to handle than present systems.

The separate means for determining the position and orientation of the system can in a similar fashion be optimized to provide the highest possible precision - in a complete different way than the small, light-weight GPS systems suitable for the integration into the means for target observation. These improved means may include differential GPS systems with enhanced antennas, combined with on-board inertial navigation systems often referenced as INS and used in aircraft, armored vehicles etc. Additional systems may also be integrated e.g. to permit position and/or orientation determination from transmitters in known positions. Furthermore, the inventive system may be configured to be independent of any influence from magnetic disturbances in the environment as well as magnetic declination or variation.

The relative position and orientation of the means for target observation to the means for determining the position and orientation of the system must be determined accurately, as this determines the azimuth and elevation directions from the observer to the target. It is known, e.g. from EP 607303, that the images captured by a camera observing at least three fiducials fixedly attached to an object, can be used to precisely determine the position and orientation of said object relative to the camera. To increase accuracy and/or visibility between the camera(s) and the fiducials, more fiducials or more cameras may be used.

Therefore, the present invention uses at least one camera attached to the means for determining the position and orientation of the system or to the means for target observation and at least three fiducials attached to the means for target observation or to the means for determining the position and orientation of the system to determine their relative position and orientation to each other.

In Fig. 2, a schematic system according to the invention as claimed in claim 1 is shown, whereby the means 1 for target observation, to which a rangefinder 2 is attached, is physically separated from the means 3, 4 for determining the position and orientation of the system. At least one camera 5 is attached to the means 3, 4 for determining the position and orientation of the system and at least three fiducials 6 are attached to the means 1 for target observation. A computing unit 7 combines the data from the means 1 for target observation and from the means 3, 4 for determining the position and orientation of the system to determine the position of the target.

### Reference numerals in the figures:

- 1: Means for target observation
- 2: Rangefinder
- 3: Means for determining the position of the system
- 4: Means for determining the orientation of the system
- 5: Camera
- 6: Fiducials
- 7: Computing unit

## Claims

1. A system for the determination of the position of an observed target, comprising:
- first means (1) for target observation,
- a rangefinder (2) fixed to the first means (1),
- second means (3, 4) for determining the global position and orientation of the second means (3, 4),
- a computing unit (7) combining data from the rangefinder (2) and the second means (3, 4) to determine the position of the target, wherein
- the second means (3, 4) is physically separated from the first means (1), **characterized in that**
- the first means (1) has at least three fiducials (6) attached to it,
- the second means (3, 4) has at least one camera (5) attached to it, and
- the computing unit (7) is operable to use the images of the fiducials (6) captured by the at least one camera (5) to determine both the position and orientation of the first means (1) relative to the second means (3, 4), and therefore to determine the target position.

2. A system for the determination of the position of an observed target, comprising:
- first means (1) for target observation,
- a rangefinder (2) fixed to the first means (1),
- second means (3, 4) for determining the global position and orientation of the second means (3, 4),
- a computing unit (7) combining the data from the first means (1), the rangefinder (2) and the second means (3, 4) to determine the position of the target, wherein
- the first means (1) has at least one camera (5) attached to it; and
- the second means (3, 4) is physically separated from the first means (1),
- **characterized in that:**
- the second means (3, 4) has at least three fiducials (6) attached to it, and
- the computing unit (7) is operable to use the images of the fiducials (6) captured by the at least one camera (5) to determine both the position and orientation of the first means (1) relative to the second means (3, 4), and therefore to determine the target position.

3. The system according to claim 1 or 2,
wherein the first means (1) for target observation is one of:
- an optical means, such as a pair of binoculars or a periscope, or
- an electro-optical means, such as a digital camera or IR-camera, and
- another electronically enhanced image source,
wherein the second means (3, 4) for determining the global position and orientation of the second means (3, 4) is any combination of any Global Positioning System, any differential Global Positioning System, any inertial navigation unit or any other electronic system returning precise global coordinates and orientation,
wherein the rangefinder (2) is any type of rangefinder, including a laser rangefinder or stereoscopic system,
wherein the fiducials (6) are any type of mechanical mark, retroreflective mark or active light source, such as a light emitting diode or laser.

## Patentansprüche

1. System zur Bestimmung der Position eines beobachteten Ziels, umfassend:
- erste Mittel (1) zur Zielbeobachtung,
- einen Entfernungsmesser (2), der an dem ersten Mittel (1) befestigt ist,
- zweite Mittel (3, 4) zur Bestimmung der globalen Position und Orientierung des zweiten Mittels (3, 4),
- eine Recheneinheit (7), die Daten aus dem Entfernungsmesser (2) und dem zweiten Mittel (3, 4) kombiniert, um die Position des Ziels zu bestimmen,
- wobei das zweite Mittel (3, 4) von dem ersten Mittel (1) physisch getrennt ist,
**dadurch gekennzeichnet, dass**
- das erste Mittel (1) mindestens drei Referenzpunkte (6) umfasst,
- das zweite Mittel (3, 4) mindestens eine daran befestigte Kamera (5) aufweist, und
- die Recheneinheit (7) so betreibbar ist, dass sie die von der mindestens einen Kamera (5) erfassten Bilder der Referenzpunkte (6) verwendet, um sowohl die Position als auch die Orientierung des ersten Mittels (1) relativ zu dem zweiten Mittel (3, 4) zu bestimmen und somit die Zielposition zu bestimmen.

2. System zur Bestimmung der Position eines beobachteten Ziels, umfassend:
- erste Mittel (1) zur Zielbeobachtung,
- einen Entfernungsmesser (2), der an dem ersten Mittel (1) befestigt ist,
- zweite Mittel (3, 4) zur Bestimmung der globalen Position und Orientierung des zweiten Mittels (3, 4),
- eine Recheneinheit (7), die die Daten aus dem ersten Mittel (1), dem Entfernungsmesser (2) und dem zweiten Mittel (3, 4) kombiniert, um die Position des Ziels zu bestimmen,
- wobei das erste Mittel (1) mindestens eine daran befestigte Kamera (5) aufweist; und
- das zweite Mittel (3, 4) ist physisch vom ersten Mittel (1) getrennt,
**dadurch gekennzeichnet, dass**
- das zweite Mittel (3, 4) mindestens drei Referenzpunkte (6) umfasst, und
- die Recheneinheit (7) so betreibbar ist, dass sie die von der mindestens einen Kamera (5) erfassten Bilder der Referenzpunkte (6) verwendet, um sowohl die Position als auch die Orientierung des ersten Mittels (1) relativ zu dem zweiten Mittel (3, 4) zu bestimmen und somit die Zielposition zu bestimmen.

3. System nach Anspruch 1 oder 2,
wobei das erste Mittel (1) zur Zielbeobachtung eines der folgenden ist:
- ein optisches Mittel, wie z.B. ein Fernglas oder ein Periskop, oder
- ein elektro-optisches Mittel, wie z.B. eine Digitalkamera oder IR-Kamera, und
- eine weitere elektronisch verbesserte Bildquelle,
wobei das zweite Mittel (3, 4) zur Bestimmung der globalen Position und Orientierung des zweiten Mittels (3, 4) eine beliebige Kombination eines beliebigen globalen Positionierungssystems, eines beliebigen differentiellen globalen Positionierungssystems, einer beliebigen Trägheitsnavigationseinheit oder eines beliebigen anderen elektronischen Systems ist, das präzise globale Koordinaten und Orientierung zurückgibt,
wobei der Entfernungsmesser (2) jede Art von Entfernungsmesser ist, einschließlich eines Laserentfernungsmessers oder eines stereoskopischen Systems,
wobei die Referenzpunkte (6) jede Art von mechanischer Markierung, retroreflektierender Markierung oder aktiver Lichtquelle, wie beispielsweise eine Leuchtdiode oder ein Laser, sind.

## Revendications

1. Un système pour la détermination de la position d'une cible observée, comprenant :
- un premier moyen (1) pour l'observation d'une cible,
- un télémètre (2) fixé au premier moyen (1),
- un second moyen (3, 4) pour déterminer la position globale et l'orientation du second moyen (3, 4),
- une unité de calcul (7) combinant des données provenant du télémètre (2) et du second moyen (3, 4) pour déterminer la position de la cible,
dans lequel
- le second moyen (3, 4) est physiquement séparé du premier moyen (1),
**caractérisé en ce que**
- le premier moyen (1) possède au moins trois repères (6) qui sont fixés dessus,
- le second moyen (3, 4) possède au moins une caméra (5) fixée dessus, et
- l'unité de calcul est fonctionnelle pour utiliser les images des repères (6) capturées par l'au moins une caméra (5) pour déterminer à la fois la position et l'orientation du premier moyen (1) par rapport au second moyen (3, 4) et de ce fait déterminer la position de la cible.

2. Un système pour la détermination de la position d'une cible observée, comprenant :
- un premier moyen (1) pour l'observation d'une cible,
- un télémètre (2) fixé au premier moyen (1),
- un second moyen (3, 4) pour déterminer la position globale et l'orientation du second moyen (3, 4),
- une unité de calcul (7) combinant les données provenant du premier moyen (1), du télémètre (2) et du second moyen (3, 4) pour déterminer la position de la cible,
dans lequel
- le premier moyen (1) possède au moins une caméra (5) fixée dessus, et
- le second moyen (3, 4) est physiquement séparé du premier moyen (1),
**caractérisé en ce que**
- le second moyen (1) possède au moins trois repères (6) qui sont fixés dessus, et
- l'unité de calcul est fonctionnelle pour utiliser les images des repères (6) capturées par l'au moins une caméra (5) pour déterminer à la fois la position et l'orientation du premier moyen (1) par rapport au second moyen (3, 4) et de ce fait déterminer la position de la cible.

3. Le système selon la revendication 1 ou 2,
dans lequel le premier moyen (1) pour l'observation d'une cible est l'un d'entre :
- un moyen optique, tel qu'une paire de jumelles ou un périscope, ou
- un moyen électro-optique, tel qu'une caméra numérique ou une caméra IR, et
- une autre source d'image à intensificateur électronique,
dans lequel le second moyen (3, 4) pour déterminer la position globale et l'orientation du second moyen (3, 4) est toute combinaison de tout système de géopositionnement, de tout système de géopositionnement différentiel, de toute unité de navigation inertielle ou de tout autre système électronique renvoyant une orientation et des coordonnées globales précises ;
dans lequel le télémètre (2) est tout type de télémètre, y compris un télémètre laser ou un système stéréoscopique,
dans lequel les repères (6) sont tout type de marquage mécanique, de marquage rétroréflecteur ou de source de lumière active, telle qu'une diode électroluminescente ou un laser.
